Europäisches Patentamt

European Patent Office

Office européen des brevets

(11) Publication number: **0 114 156**
A2

# EUROPEAN PATENT APPLICATION

(21) Application number: **84850016.1**

(22) Date of filing: **17.01.84**

(51) Int. Cl.³: **A 01 B 3/40,** A 01 B 61/04,
A 01 B 15/14

(30) Priority: **18.01.83 SE 8300235**

(43) Date of publication of application: **25.07.84**
**Bulletin 84/30**

(84) Designated Contracting States: **AT DE FR GB**

(71) Applicant: **Lindqvist, Rolf Erik, Atterboms Gata 26,
S-582 49 Linköping (SE)**

(72) Inventor: **Lindqvist, Rolf Erik, Atterboms Gata 26,
S-582 49 Linköping (SE)**

(74) Representative: **Ahlström, Erik, AHLPATENT AB
Hemstigen 21, S-55266 Jönköping (SE)**

(54) **A reversible plough.**

(57) A reversible plough comprises a main frame and at least one pair of plough bottoms (80) located above and below each other, respectively, one of said plough bottoms being left-turning and the other being right-turning. The plough bottoms of each pair are synchronously rotatable on a substantially horizontal, common axis of rotation (71). To make possible change of the plough bodies without doubling of any other essential parts of the plough than the plough bottoms (80) the axis of rotation of the plough bottoms is located on a lower level than the main frame is.

EP 0 114 156 A2

A reversible plough

## Background of the Invention

This invention relates to a reversible plough of the type generally defined in the preamble of claim 1.

## Summary of the Invention

The principal object of the invention is to provide a reversible plough in which the only essential parts which have to be doubled for achieving the reversal function are the plough bottoms or bodies.

This object is attained thanks to the fact that the plough according to the invention is so constructed as is set forth in the characterizing clause of claim 1.

## Brief Description of the drawings

Further features and advantages of the plough according to the invention will become apparent from the following detailed description and the annexed drawings which diagrammatically and as non-limiting examples illustrate a preferred embodiment of the invention.

Fig. 1 is a plan view of a plough according to a first embodiment of the invention.

Fig. 2 is a side view corresponding to Fig. 1.

Fig. 3 is a more detailed, partial side view on a larger scale.

Fig. 4 is a plan view of a modified reversible plough according to the invention

## Description of the Preferred Embodiment

The reversible plough is intended to be coupled to a tractor or another traction vehicle and comprises a main frame 10, a headstock 20 secured to the frame and consisting of two lateral members 21 which are united with each other at their upper portions and with the frame at their lower portions. A top link (not shown) may be inserted into the headstock in any of a plurality of different positions. In the lower end of the headstock 20 a straight carrier axle 40 extending substantially parallel to the frame 10 and consisting of two parts which may be telescopically pulled out or pushed in is secured in a sleeve 41. 49 designates a hydro-pneumatic spring.

In the embodiment illustrated in the drawings four beam or leg housings 50 are bolted to the main frame 10. The mutual interspace between the beam housings is preferably not larger than 800 mm when measured along the main frame 10. In each of the beam housings a plough beam or leg consisting of two rigidly interconnected members 51, 52 is pivotably journalled on a pivot axis 53. The plough beams 51, 52 are pivotable upwards on the pivot axis 53 when a stationary obstacle in the earth is encountered and may be returned to their initial positions by a hydraulic jack or ram comprising a cylinder 54 and a piston movable therein and having a piston rod 55. The cylinder 54 which is in communication with the oil-gas spring 49 by means of a hose 56 is pivotably journalled in the beam housing 50 on an axis 57. The piston rod 55 belonging to the cylinder 54 is rotatably journalled on a shaft 58 in the beam 52.

The lower free ends of the plough beams are comprised of bearing sleeves 70. In each of them a shaft 71 to which a pair of arms 72 are secured is rotatably journalled. Each arm 72 carries a plough bottom or body 80 rigidly united with its arm and comprising a main portion 81, a share point 82 and a mouldboard 83. One of the plough bottoms, e.g. the lower one, of each pair is right-handed or right-turning while the other plough bottom, e.g. the upper one, is left-handed or left-turning in the position shown in the Figures.

The shafts 71 are connected to drive means 73 which in the example shown are hydraulic and connected to the hydraulic system of the traction vehicle by conduits 74 and by means of which the shafts 71 and consequently also the plough bottoms 80 can be rotated through 180° forwards and backwards so that it becomes possible after the completion of a furrow to raise the operative plough bottoms out of the earth and instead hereof bring the other plough bottoms, which were inoperative during the ploughing of said furrow, into engagement with the earth for ploughing the following furrow in the opposite direction with respect to the furrow just ploughed, whereby the ridges are always turned in the same direction.

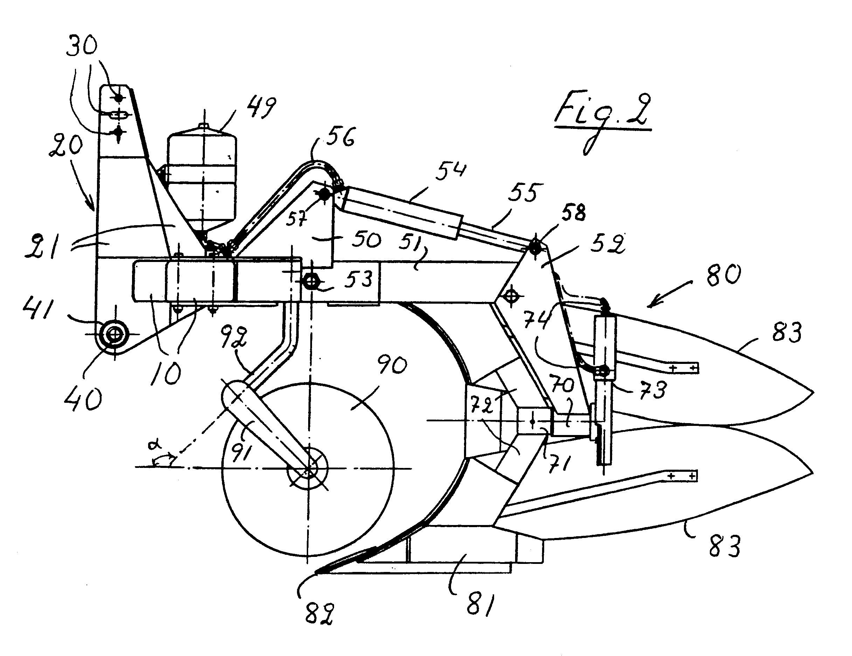

In a preferred embodiment of the invention each coulter disc 90 which in the exemplifying embodiments is plain and unnotched is rotatably journalled on a stub shaft in one (the lower) end of a swing arm 91 which at its other (upper) end is pivotally journalled in a rod 92 secured to the appurtenant beam member 51. According to one feature of the invention the disc coulter arm 91 is pivotable on an axis which forms an obtuse angle $\alpha$, which in the exemplified embodiment is about 135°, with the direction of travel of the plough. Through such a selection of the angle the coulter disc 90 also gets a vertically upwards directed movement component at its rotational movement perpendicularly to the plane of the paper in Fig. 2. According to another feature the rod 92 is secured to the beam member 51 ahead of the pivot axis 53.

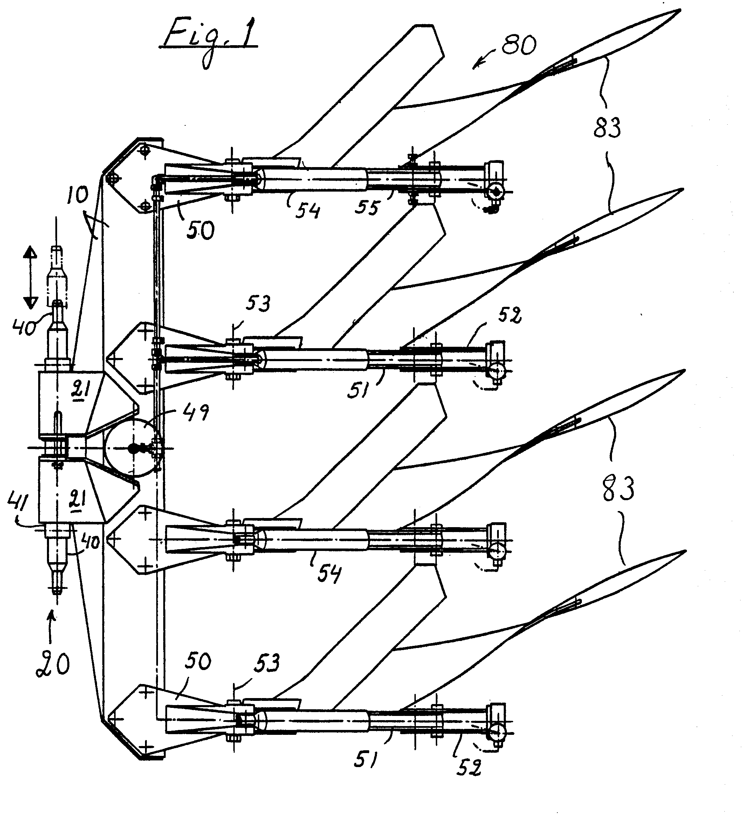

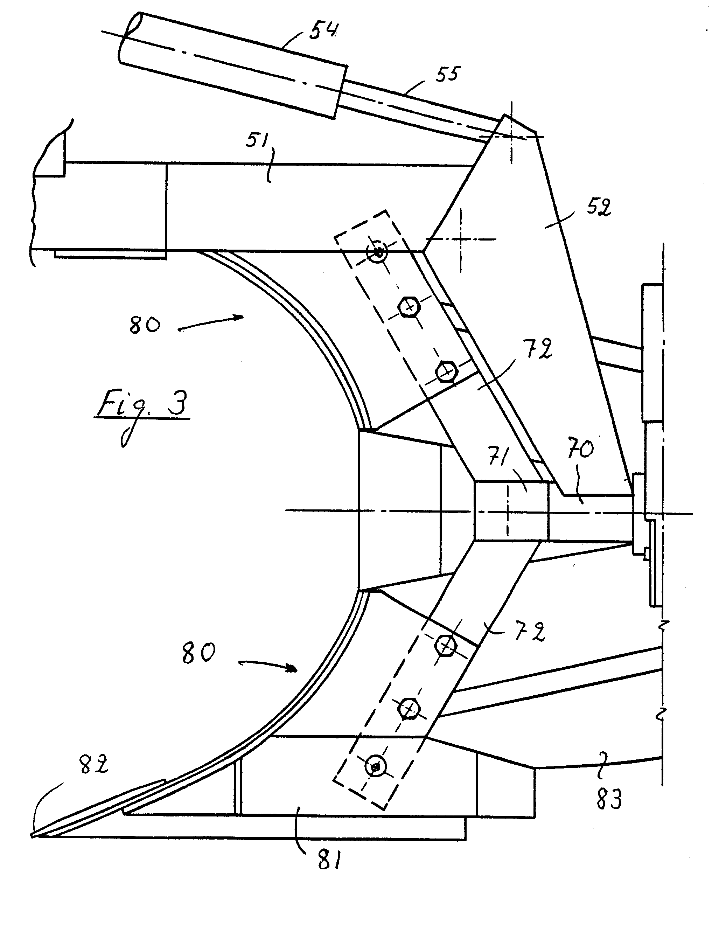

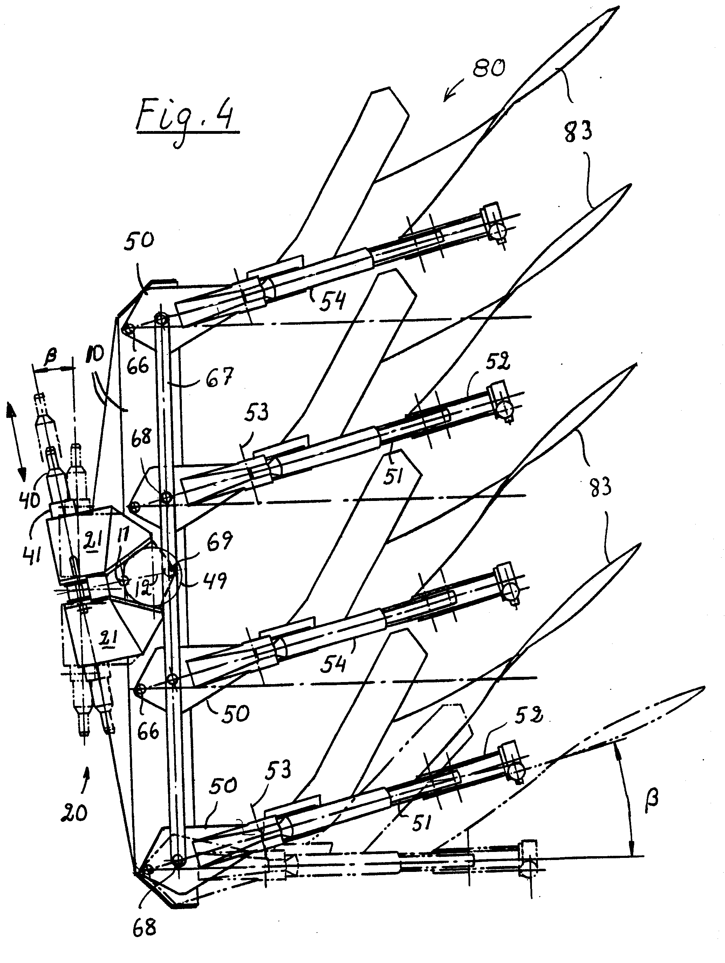

In Fig. 4 another embodiment is illustrated which differs from that described above with reference to Figs. 1 - 3 principally therein that the main frame 10 is rotatable on a vertical axis 11 with respect to the headstock 20 and the carrier axle 40. According to Fig. 4 the beam housings 50 too are rotatably united with the main frame 10 by means of vertical pivot pins 66. Furthermore, the beam housings are interconnected by means of a tie bar or parallel rod 67 or the like which is coupled to the beam housings through pivot or articulation pins 68. The rotational movement (the angle β) with respect to the main frame, e.g. from the position shown in dash-dot-dot-lines to that shown in solid lines in Fig. 4, is transferred to the beam housings 50 and the plough beams through a torque arm 12 which is connected to the parallel rod 67 through a stub shaft 69.

In the two embodiments described with reference to Figs. 1 - 4 the carrier axle 40 which is straight and parallel to the main frame 10 may be made solid or integral and displaceable sideways to compensate for the traction geometry of the tractor, e.g. when travelling with side inclination on a slope.

Thanks to the construction of the reversible plough according to the invention many advantages are gained. In particular it is not necessary to double any other members than the plough bottoms 80 and their fastening and bearing means 70 - 72 to make possible change of operative plough bottom. An advantageous consequence hereof resides therein that the swinging up of the plough beams 51, 52 and the plough bottoms 80 which is carried out when the share point 82 encounters a stationary obstacle need not be possible in more than one direction independently of which one of the two plough bottoms that is operative.

Thanks to the fact that the main frame 10 normally is substantially perpendicular to the direction of traction the plough becomes extraordinarily short when measured in the direction of traction. Any land wheel on which the rear portion of the plough rests at plowing is not necessary which makes possible plowing right out to ditches, fences and the like. In addition hereto the center of gravity of the plough, which may be made comparatively light, becomes advantageously advanced. Thanks to these two features it becomes possible to use a smaller tractor than before for a given plough having a predetermined member of plough bottoms, or reversly to pull a plough having a greater number of plough bottoms than earlier by a predetermined tractor. Thanks to the design according to the invention it will also become possible to plow a field strip having a predetermined width by a plough having fewer plough bottoms.

The embodiments described above and illustrated in the drawings are, of course, to be regarded merely as non-limiting examples and may as to their details be modified in several ways within the scope of the following claims. For instance, the number of plough bottoms may be another one than four, e.g. three or five. Furthermore, the drive means for the switching of the displaceable parts of the plough may be e.g. electrical instead of hydraulic. In addition hereto the beam may be rigidly clamped in the beam housing instead of being pivotable.

## CLAIMS

1) A reversible plough having a main frame (10) and at least one pair of plough bottoms (80) which are located above and below each other, respectively, and of which one is left-turning and the other is right-turning, the plough bottoms of each pair being preferably synchronously rotatable on a substantially horizontal, preferably common axis of rotation (71), c h a r a c t e r i z e d in that the axis of rotation is located on a level lower than that of the main frame (10).

2) A reversible plough according to claim 1 having a plurality of plough bottom pairs (80), c h a r a c t e r i - z e d in that the individual plough bottom pairs (80) have different axes of rotation (71).

3) A reversible plough which comprises a main frame (10) carrying at least one leg housing (50) with an appurtenant plough leg (51, 52), c h a r a c t e r i z e d in that one pair of plough bottoms (80) of which one is left-turning and the other one is right-turning are rotatably jounalled in the plough leg.

4) A reversible plough according to claim 3, c h a r a c - t e r i z e d in that the plough leg (51, 52) is rotatably journalled in the leg housing (50) and rotatable upwards only in one direction to an elevated position, e.g. when a plough bottom (80) encounters an obstacle.

5) A reversible plough, preferably according to claim 1, having a carrier axle (40) and a main frame (10) which at the ploughing of substantially straight furrows is substantially perpendicular to the direction of traction and parallel to the carrier axle (40), c h a r a c t e r i - z e d in that the main frame (10) is rotatable with respect to the carrier axle on a substantially vertical axis of rotation (11).

6) A reversible plough according to claim 5 having a plurality of leg housings (50) which are secured side by side to the main frame (10), c h a r a c t e r i - z e d in that the leg housings are rotatable on substantially vertical axes (66) with respect to the main frame and interconnected by means of tie rods (67) or the like for maintaining a constant angle between the leg housings (50) and the carrier axle (40) at rotational movement of the main frame.

7) A reversible plough having a substantially straight main frame (10), a plurality of leg housings (50) secured beside each other to the main frame and each carrying an individual plough leg (51, 52), and a carrier axle (40), c h a r a c t e r i z e d in that the carrier axle (40) is substantially straight and parallel to the main frame.

8) A reversible plough according to claim 7, c h a r a c - t e r i z e d in that the carrier axle (40) is solid and displacable in its longitudinal direction with respect to the main frame.

9) A plough, preferably a reversible plough, having at least one disc coulter (90) or the like which is rotatably mounted on a stub shaft which is carried by a rotatable carrier arm (91), c h a r a c t e r i z e d in that the axis of rotation of the carrier arm forms a preferably obtuse angle (α) with the direction of movement of the plough.

10) A reversible plough according to claim 7, c h a r a c - t e r i z e d in that the carrier axle (40) is divided and capable of being telescopically pulled out of and pushed in into a sleeve (41) to which the parts of the carrier axle are secured.

11) A plough according to claim 9, c h a r a c t e -
r i z e d  in that the rod (92) of the disc coulter
is affixed ahead of the axis of rotation (53) of the
plough leg (51), as seen in the direction of travel of
the plough.

Fig. 1

0114156

Fig.2

Fig. 3

0114156

Fig. 4